# EUROPÄISCHE PATENTSCHRIFT

(11) **EP 2 525 948 B1**
(45) Veröffentlichungstag und Bekanntmachung des Hinweises auf die Patenterteilung: **25.08.2021**
(21) Anmeldenummer: 11701032.2
(22) Anmeldetag: 05.01.2011
(51) Int. Cl.: B26B 13/26, B26B 13/16, A01G 3/025, B23D 29/02

(54) **SCHERE**
SCISSORS
SÉCATEUR

(30) Priorität: 22.01.2010 DE 102010001161
(43) Veröffentlichungstag der Anmeldung: 28.11.2012
(73) Patentinhaber: BESSEY Tool GmbH & Co. KG, 74321 Bietigheim-Bissingen (DE)
(72) Erfinder: BASTIAN, Uwe, 74321 Bietigheim-Bissingen (DE)
(74) Vertreter: Hoeger, Stellrecht & Partner Patentanwälte mbB
(86) Internationale Anmeldenummer: PCT/EP2011/050084
(87) Internationale Veröffentlichungsnummer: WO 2011/089028

(56) Entgegenhaltungen:
- DE-A1-102008 014 836
- FR-A- 1 031 838
- GB-A- 592 207
- GB-A- 2 182 597
- US-A- 2 589 727
- US-A- 2 929 141
- US-A1- 2006 137 192
- US-A1- 2007 163 126

## Beschreibung

Die Erfindung betrifft eine Schere, umfassend einen Scherenkopf mit einem ersten Scherenschenkel und einem zweiten Scherenschenkel, welche um eine erste Schwenkachse schwenkbar aneinander angelenkt sind, und eine Halteeinrichtung mit einem ersten Handgriff und einem zweiten Handgriff, welche um eine zweite Schwenkachse schwenkbar aneinander angelenkt sind, wobei der erste Scherenschenkel an dem ersten Handgriff um eine dritte Schwenkachse schwenkbar angelenkt ist und der zweite Scherenschenkel an dem zweiten Handgriff um eine vierte Schwenkachse schwenkbar angelenkt ist, und eine Fanglasche, welche an dem einen Handgriff angeordnet ist und auf den anderen Handgriff wirkt, wobei die Fanglasche als Öffnungsbegrenzer für den Scherenkopf ausgebildet ist, welche eine maximale Öffnungsweite einstellt.

Aus der DE 10 2008 014 836 A1 ist eine Schere zum Durchschneiden von Metallbändern bekannt, umfassend einen Scherenkopf mit einem ersten Scherenschenkel und einem zweiten Scherenschenkel, welche relativ zueinander schwenkbar sind, wobei an dem ersten Scherenschenkel eine Schneid-Biege-Einrichtung mit einer Schneide und einem Kraftbeaufschlagungsbereich zum Biegen eines Werkstücksbereichs angeordnet ist und an dem zweiten Scherenschenkel eine Auflageeinrichtung für das Werkstück mit einer Öffnung, in die die Schneid-Biege-Einrichtung eintauchbar ist, angeordnet ist, wobei die Schneid-Biege-Einrichtung so ausgebildet ist, dass der Kraftbeaufschlagungsbereich auf einen Werkstückbereich erst dann wirkt, wenn an dem Werkstückbereich zuvor ein Schnitt eingebracht wurde.

Aus der DE 103 10 259 A1 ist eine Durchlaufschere bekannt, bei der die Schneiden individuelle Teile sind, welche an Scheibenhaltbereichen von zugeordneten Scherenkopfschenkeln fixiert sind.

Aus der DE 92 04 138 U1 ist eine Schere bekannt, mit zwei jeweils einen Betätigungshebel und ein Scherblatt aufweisenden, mittels eines durch zugeordnete, im Zwischenbereich angeordnete Achsbohrungen hindurchgreifenden Achsstifts miteinander verbundenen Scherenhälften, an denen eine in Öffnungsrichtung vorgespannte Feder angreift, und mit einer den als Schneidwerkzeuge zusammenwirkenden Scherblättern zugeordneten Klemmeinrichtung.

Aus der US 4,463,497 ist eine Durchlaufschere bekannt.

Aus der US 2,589,727 ist ein Werkzeug bekannt, welches ein Paar von schwenkbar verbundenen Hebelköpfen umfasst, welche Verlängerungen aufweisen, um eine Kraft ausüben zu können, und gegenseitig überlappende Backen aufweist.

Aus der US 2,929,141 ist ein Verschluss- und Öffnungsmechanismus für schneidenbehaftete Werkzeuge mit schwenkbaren Handgriffen bekannt. Ein Verschlussglied weist ein Ende auf, welches schwenkbar an einem Handgriff angeordnet ist und sich quer über den anderen Handgriff erstreckt, wobei das Verschlussglied einen sich longitudinal erstreckenden Schlitz aufweist, welcher an seinem inneren Ende und an seinem äußeren Ende geschlossen ist und weist eine Aufnahme auf, welche mit dem Schlitz an dem inneren Ende des Schlitzes in Verbindung steht. An dem anderen Handgriff ist ein Stift angeordnet, welcher durch den Schlitz durchgetaucht ist. Eine Spiralfeder ist frei gleitbar auf dem Verschlussglied angeordnet.

Der Erfindung liegt die Aufgabe zugrunde, eine Schere der eingangs genannten Art bereitzustellen, welche kompakt aufgebaut ist und eine hohe Schneidleistung aufweist.

Diese Aufgabe wird bei der eingangs genannten Schere erfindungsgemäß dadurch gelöst, dass die Fanglasche an der Halteeinrichtung an einer Seite bezogen auf die zweite Schwenkachse angeordnet ist, welche der Seite abgewandt ist, an welcher die erste Schwenkachse liegt.

Eine Schere lässt sich kompakt aufbauen und weist eine hohe Schneidleistung auf, wenn die Drehpunkte der Scherenschenkel und der Handgriffe möglichst nahe zusammen liegen, das heißt der Abstand zwischen der ersten Schwenkachse und der zweiten Schwenkachse möglichst gering ist. Dadurch ist aber das Platzangebot an dem Scherenkopf oder in einem vorderen Bereich der Halteeinrichtung für einen Endanschlag zur Öffnungsbegrenzung des Scherenkopfs stark verringert bzw. es liegt kein solcher Platz mehr vor.

Außerdem ist, wenn ein solcher Endanschlag realisierbar ist, die Öffnungsbegrenzung relativ ungenau bzw. der Aufwand zur Einstellung des Endanschlags ist relativ hoch.

Eine Öffnungsbegrenzung ist notwendig, um sicherzustellen, dass bei der Schere eine genügende Überdeckung einer Schneide vorliegt, um ein Einschneiden zu verhindern.

Eine Öffnungsbegrenzung ist insbesondere bei einer Durchlaufschere notwendig. Bei zu weit geöffnetem Scherenkopf liegt keine Vorspannung zwischen einer Schneide und Gegenschneide mehr vor und die entsprechende Schere funktioniert nicht mehr.

Bei der erfindungsgemäßen Lösung ist eine Fanglasche als Öffnungsbegrenzer für den Scherenkopf ausgebildet, welcher die maximale Öffnungsweite einstellt. Die Fanglasche begrenzt die Auseinanderschwenkbarkeit des ersten Handgriffs und des zweiten Handgriffs und damit die Öffnungsweite des Scherenkopfs. Die Begrenzung der Öffnungsweite sichert die Funktion der Schere, nämlich dass stets eine Vorspannung zwischen Schneide und Gegenelement bei geöffnetem Scherenkopf vorliegt.

Dadurch ist es auch möglich, den Abstand zwischen der ersten Schwenkachse und der zweiten Schwenkachse zu minimieren, und eine kompakte Schere mit hoher Schneidleistung zu realisieren. Durch entsprechende Ausbildung der Fanglasche lässt sich die Öffnungsweite auf einfache Weise mit hoher Genauigkeit einstellen; ein maximaler Schwenkabstand zwischen dem ersten Scherenschenkel und dem zweiten Scherenschenkel lässt sich über die Einstellung des maximalen Schwenkwinkels an der Halteeinrichtung exakt definieren. Die Fanglasche ist außerhalb des Scherenkopfs und "weit weg" von der zweiten Schwenkachse positioniert.

Die Fanglasche ist an der Halteeinrichtung an einer Seite bezogen auf die zweite Schwenkachse angeordnet, welche der Seite abgewandt ist, an welcher die erste Schwenkachse liegt. Die Fanglasche kann dadurch auf optimierte Weise ihre Funktion als Öffnungsbegrenzer für den Scherenkopf erfüllen, wobei sie außerhalb der Scherenschenkel und eines vorderen Bereichs der Halteeinrichtung positioniert ist.

Bei einer konstruktiv einfachen Ausführungsform lässt sich die Fanglasche in einen Riegel, welcher die geschlossene Stellung des Scherenkopfs fixiert, integrieren.

Günstig ist es, wenn die Fanglasche an dem ersten Handgriff schwenkbar angelenkt ist. Dadurch lässt sich die Fanglasche verliersicher an der Schere halten. Der Übergang zwischen Fixierung der geschlossenen Stellung zu einer schneidwirksamen Stellung einschließlich Öffnungsbegrenzungsstellung lässt sich auf einfache Weise durchführen.

Günstig ist es, wenn die Fanglasche im Bereich eines Schwenklagers des ersten Handgriffs für den ersten Scherenschenkel angeordnet ist. Dadurch lässt sich die Anzahl der Teile minimieren, die für die Herstellung der Schere notwendig sind. Weiterhin ergibt sich ein konstruktiv einfacher Aufbau der Schere.

Aus dem gleichen Grund ist es günstig, wenn eine Schwenkachse der Fanglasche mindestens näherungsweise mit der dritten Schwenkachse zusammenfällt. Dadurch lässt sich ein Bereich des Schwenklagers für die Schwenkbarkeit des ersten Scherenschenkels an dem ersten Handgriff auch als Schwenklager für die Fanglasche ausbilden.

Günstig ist es, wenn die Fanglasche über einen Bundbolzen an dem ersten Handgriff angelenkt ist. Ein Stiftelement des Bundbolzens lässt sich dadurch als Schwenkwelle für die Schwenkbarkeit des ersten Scherenschenkels an dem ersten Handgriff einsetzen. Ferner lässt er sich als Schwenkwelle für die Schwenkbarkeit der Fanglasche an dem ersten Handgriff einsetzen. Ein Bund des Bundbolzens kann für die axiale Fixierung der Fanglasche sorgen.

Es ist dann günstig, wenn zwischen der Fanglasche und dem ersten Handgriff ein Federring angeordnet ist. Der Federring ist insbesondere in einer Richtung einer Schwenkachse der Fanglasche elastisch ausgebildet. Dadurch lassen sich Toleranzen ausgleichen. Es ergibt sich auf einfache Weise eine Schwenkbarkeit des Riegels bei entsprechender Kraftausübung. Insbesondere drückt der Federring die Fanglasche gegen einen Bund eines Bundbolzens.

Günstig ist es, wenn der Bundbolzen eine Schwenkwelle für die Schwenkbarkeit des ersten Scherenschenkels an dem ersten Handgriff bildet. Dadurch lässt sich die Schere auf konstruktiv einfache Weise unter Minimierung der benötigten Bauteile realisieren.

Ganz besonders vorteilhaft ist es, wenn die Fanglasche als Riegel ausgebildet ist, durch welchen eine geschlossene Stellung des Scherenkopfs fixierbar ist. Die Fanglasche weist dann eine Multifunktionalität auf; sie begrenzt den Öffnungswinkel des Scherenkopfs und sichert die geschlossene Stellung des Scherenkopfs. Dadurch lässt sich die Anzahl der Bauteile für die Schere minimieren. Grundsätzlich ist es aber auch möglich, dass ein Riegel zur Sicherung der geschlossenen Stellung des Scherenkopfs und die Fanglasche getrennte Bauteile sind.

Ganz besonders vorteilhaft ist es, wenn die Fanglasche eine Ausnehmung und insbesondere eine seitlich geschlossene Ausnehmung aufweist, in welche ein Fixierungselement eingetaucht ist, welches an dem zweiten Handgriff sitzt. Das Fixierungselement kann nicht aus der Ausnehmung austauchen, wenn diese geschlossen ist. Die Ausnehmung ist so ausgebildet, dass über die Position des Fixierungselements in der Ausnehmung die geschlossene Stellung fixiert ist oder eine Schneidbewegung mit Öffnungsbegrenzung der Scherenkopf realisiert ist. Durch entsprechende Ausbildung und Dimensionierung lassen sich diese unterschiedlichen Stellungen je nach Position des Fixierungselements auf einfache Weise realisieren, wobei die entsprechenden Positionen genau einstellbar sind.

Insbesondere bildet das Fixierungselement eine Schwenkwelle für die Schwenkbarkeit des zweiten Scherenschenkels an dem zweiten Handgriff. Dadurch lässt sich die Anzahl der benötigten Bauteile für die Schere minimieren.

Es kann vorgesehen sein, dass das Fixierungselement ein Bundbolzen ist. Durch ein Stiftelement des Bundbolzens lässt sich eine Schwenkwelle bereitstellen. Der Bund kann für eine axiale Sicherung des Riegels an der Schere sorgen.

Es ist insbesondere günstig, wenn zwischen der Fanglasche und dem zweiten Handgriff am Fixierungselement ein Federring angeordnet ist. Insbesondere übt der Federring eine axiale Kraft aus. Dadurch lassen sich Fanglaschenstellungen (zusätzlich) kraftschlüssig sichern.

Vorteilhafterweise weist die Ausnehmung einen ersten Bereich auf, wobei bei in dem ersten Bereich positioniertem Fixierungselement der Scherenkopf in seiner geschlossenen Stellung fixiert ist. Der erste Bereich dient als Fixierungsbereich für die geschlossene Stellung des Scherenkopfs.

Der erste Bereich ist insbesondere durch gegenüberliegende Sperrflächen für das Fixierungselement begrenzt. Die gegenüberliegenden Sperrflächen sorgen dafür, wenn das Fixierungselement in dem ersten Bereich positioniert ist, dass der erste Handgriff und der zweite Handgriff nicht auseinander schwenkbar sind.

Es ist ferner günstig, wenn die Ausnehmung einen zweiten Bereich aufweist, wobei bei in dem zweiten Bereich positioniertem Fixierungselement die Öffnungsweite des Scherenkopfs begrenzt ist. Der erste Bereich und der zweite Bereich sind miteinander verbunden, sodass das Fixierungselement für den zweiten Bereich in den ersten Bereich überführbar ist und umgekehrt. Das Fixierungselement lässt sich in dem zweiten Bereich bewegen, um eine Schneidbewegung durchführen zu können. Der zweite Bereich stellt aber auch eine Sperrfläche bereit, um eine Öffnungsbegrenzung für den Scherenkopf zu erreichen.

Insbesondere ist der zweite Bereich durch eine Sperrfläche für das Fixierungselement begrenzt, welche dem ersten Handgriff abgewandt ist. Dadurch lässt sich ein maximaler Schwenkwinkel zwischen dem ersten Handgriff und dem zweiten Handgriff definieren, durch welchen wiederum die Öffnungsweite des Scherenkopfs begrenzt ist.

Günstig ist es, wenn der erste Bereich zu dem zweiten Bereich bezogen auf eine Mittelachse der Fanglasche querversetzt ist. Wenn dann das Fixierungselement in dem ersten Bereich positioniert ist, ist eine geschlossene Stellung des Scherenkopfs gesichert. In dem zweiten Bereich lässt sich das Fixierungselement bewegen (der zweite Handgriff lässt sich relativ zu dem ersten Handgriff verschwenken), um eine Schneidbewegung durchführen zu können.

Bei einer vorteilhaften Ausführungsform weist die Ausnehmung eine L-förmige Gestalt auf. Dadurch lässt sich ein erster Bereich für die Sicherung einer geschlossenen Stellung des Scherenkopfs realisieren. Ferner lässt sich ein zweiter Bereich realisieren, in welchem die Schwenkbarkeit erlaubt ist. Weiterhin lässt sich ein maximaler Schwenkwinkel zwischen dem ersten Handgriff und dem zweiten Handgriff definieren.

Günstig ist es, wenn die erste Schwenkachse, die zweite Schwenkachse, die dritte Schwenkachse und die vierte Schwenkachse jeweils parallel zueinander orientiert sind. Dadurch lässt sich eine Schere mit einer Übersetzung realisieren, welche bei Aufeinanderzuschwenken des ersten Handgriffs und des zweiten Handgriffs eine Schneidbewegung durchführt. Es lässt sich eine hohe Schneidleistung erreichen.

Günstig ist es, wenn der Abstand zwischen der ersten Schwenkachse und der zweiten Schwenkachse kleiner oder gleich 2 cm ist. Dadurch lässt sich bei kompaktem Aufbau eine hohe Schneidleistung realisieren.

Günstig ist es, wenn eine Federeinrichtung vorgesehen ist, welche so angeordnet und ausgebildet ist, dass das Zuschwenken des zweiten Handgriffs auf den ersten Handgriff einen Kraftaufwand gegen die Federkraft der Federeinrichtung erfordert. Die Federeinrichtung ist bestrebt, den ersten Handgriff und den zweiten Handgriff auseinander zu schwenken. Wenn ein Riegel und insbesondere die Fanglasche in ihrer Fixierungsstellung ist, wird diese Schwenkbewegung gesperrt und die geschlossene Stellung gesichert. Die Öffnungsweite wird durch die Fanglasche dadurch begrenzt, dass nach Erreichen eines maximalen Öffnungswinkels ein weiteres Auseinanderschwenken nicht mehr möglich ist.

Vorzugsweise ist die Federeinrichtung an der Halteeinrichtung angeordnet, um eine einfache Bedienbarkeit und einen einfachen Aufbau zu erreichen. Durch Aufeinanderzubewegen des ersten Handgriffs und des zweiten Handgriffs entgegen der Kraftwirkung der Federeinrichtung lässt sich eine Schneidbewegung durchführen.

Die nachfolgende Beschreibung bevorzugter Ausführungsformen dient im Zusammenhang mit den Zeichnungen der näheren Erläuterung der Erfindung. Es zeigen:
- Figur 1: eine Draufsicht auf ein Ausführungsbeispiel einer erfindungsgemäßen Schere von einer ersten Richtung her;
- Figur 2: eine Draufsicht auf die Schere gemäß Figur 1 von der Gegenrichtung her;
- Figur 3: eine Seitenansicht der Schere gemäß Figur 1 in der Richtung A; und
- Figur 4: eine Seitenansicht der Schere gemäß Figur 1 in der Richtung B.

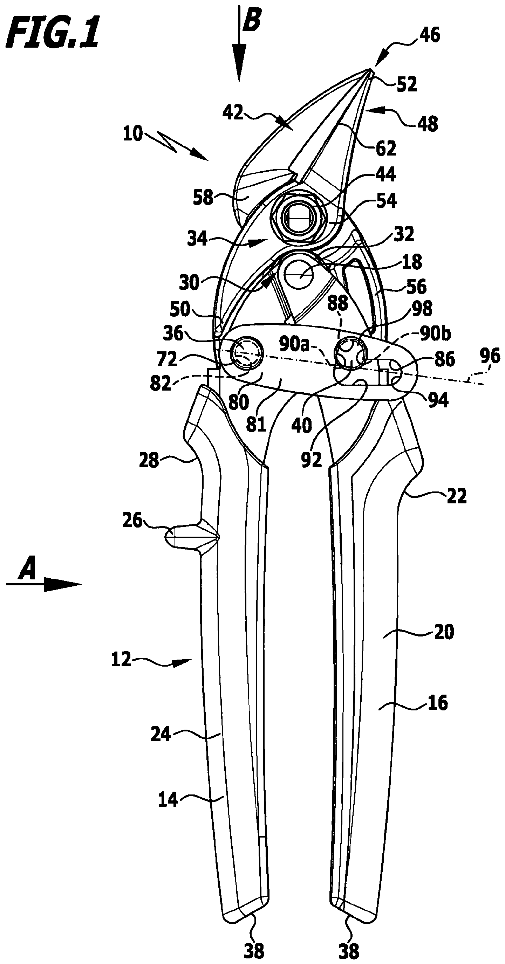

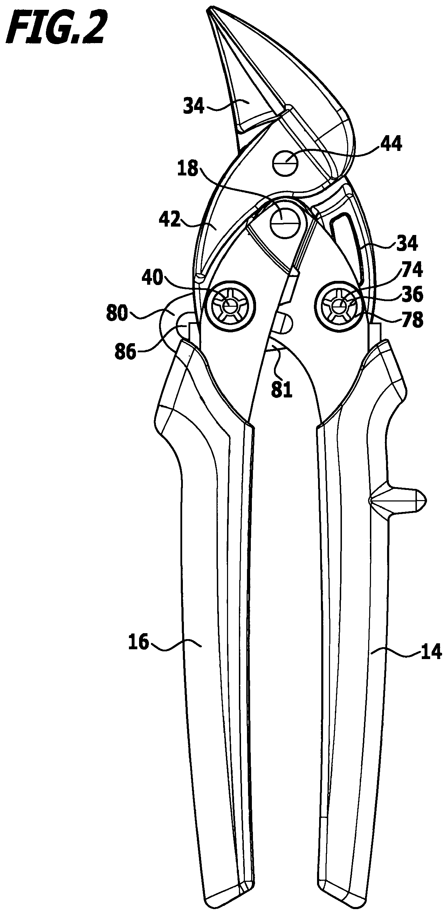

Ein Ausführungsbeispiel einer erfindungsgemäßen Schere, welches in den Figuren 1 bis 4 gezeigt ist und dort mit 10 bezeichnet ist, ist eine Handschere. Diese umfasst eine Halteeinrichtung 12, über welche die Schere 10 mit einer Hand gehalten und bedient werden kann.

Die Schere 10 ist insbesondere eine Durchlaufschere. Bei einer solchen Durchlaufschere ist für eine Schneidbewegung eine Vorspannung zwischen einer Schneide und Gegenschneide notwendig.

Die Halteeinrichtung 12 hat einen ersten Handgriff 14 und einen zweiten Handgriff 16. Der erste Handgriff 14 und der zweite Handgriff 16 sind über ein Drehlager 18 schwenkbar aneinander angelenkt.

Üblicherweise wird die Schere 10 so gehalten, dass ein Bereich der Handinnenseite in der Nähe des Daumens an den zweiten Handgriff 16 angelegt wird. An dem zweiten Handgriff 16 ist ein Halteelement 20 beispielsweise aus einem Kunststoffmaterial angeordnet. Dieses weist eine Erhöhung 22 auf, an welche ein Bereich zwischen dem Daumen und dem Zeigefinger anlegbar ist.

Der erste Handgriff 14 wird üblicherweise dadurch gefasst, dass vordere Fingerbereiche angelegt werden und den Handgriff 14 dann auch teilweise umgreifen können. An dem ersten Handgriff 14 ist ein Halteelement 24 beispielsweise aus einem Kunststoffmaterial angeordnet. Dieses Halteelement 24 weist eine Erhöhung 26 auf, wobei in einer Richtung von der Erhöhung 26 zu dem Drehlager 18 hin an dem Halteelement 24 eine Art von Kuhle 28 gebildet ist, in welche beispielsweise ein vorderer Bereich eines Zeigefingers einlegbar ist.

Die Erhöhung 26 verhindert das Abrutschen der Hand beim Ausüben einer Nachschiebbewegung bei einem Schneidvorgang.

An dem Drehlager 18 ist eine Federeinrichtung 30 mit einer Spiralfeder 32 bzw. Drehfeder oder Schenkelfeder angeordnet. Die Federkraft der Federeinrichtung 30 drückt den ersten Handgriff 14 und den zweiten Handgriff 16 auseinander bis zu einem maximalen Öffnungswinkel. Um den zweiten Handgriff 16 auf den ersten Handgriff 14 zuschwenken zu können, muss die Federkraft der Federeinrichtung 30 überwunden werden.

An dem ersten Handgriff 14 ist ein erster Scherenschenkel 34 angelenkt. Dazu ist ein Schwenklager 36 vorgesehen, welches zwischen dem Drehlager 18 und einem hinteren Ende 38 der Halteeinrichtung 12 angeordnet ist.

An dem zweiten Handgriff 16 ist über ein Schwenklager 40 ein zweiter Scherenschenkel 42 angelenkt. Das Schwenklager 40 liegt dabei ebenfalls zwischen dem Drehlager 18 und dem hinteren Ende 38 der Halteeinrichtung.

Der erste Scherenschenkel 34 und der zweite Scherenschenkel 42 sind über ein Schwenklager 44 direkt miteinander verbunden. Dieses Schwenklager 44 liegt zwischen einem vorderen Ende 46 der Schere 10 und dem Drehlager 18. Die Schwenklager 36 und 40 liegen auf einer anderen Seite der Schere 10 als das Schwenklager 44, wobei die Seiten auf das Drehlager 18 bezogen sind.

Der erste Scherenschenkel 34 und der zweite Scherenschenkel 42 bilden einen Scherenkopf 48. Der Scherenkopf 48 ist über die Zuschwenkung des zweiten Handgriffs 16 auf den ersten Handgriff 14 schließbar, um eine Schneidbewegung durchführen zu können.

Der erste Scherenschenkel 34 erstreckt sich von einem Bereich 50, mittels welchem er über das Schwenklager 36 an dem ersten Handgriff 14 gelagert ist, bis zu einem vorderen Ende 52. In einem mittleren Bereich 54 zwischen dem Bereich 50 und dem vorderen Ende 52 ist das Schwenklager 44 angeordnet.

Der zweite Scherenschenkel 42 erstreckt sich mit einem Bereich 56 von dem Schwenklager 40 über einen mittleren Bereich 58 bis zu dem vorderen Ende 46. An dem mittleren Bereich 58 ist das Schwenklager 44 angeordnet. Der mittlere Bereich 58 hält eine Auflageeinrichtung 60, auf die ein Werkstück bei einem Schneidvorgang auflegbar ist.

Der mittlere Bereich 50 ist quer zu der Auflageeinrichtung 60 orientiert. Ferner ist der Bereich 56 quer zu dem mittleren Bereich 58 orientiert. Die Querorientierung der Auflageeinrichtung 60 zu dem mittleren Bereich 58 liegt beispielsweise bei näherungsweise 90°. Die Orientierung des Bereichs 56 zu dem mittleren Bereich 58 liegt beispielsweise bei näherungsweise 30°.

Durch eine entsprechende "winklige" Ausbildung des zweiten Scherenschenkels 42 lässt sich die Auflageeinrichtung 60 unterhalb einer Schneide 62 (bei geöffnetem Scherenkopf 58) positionieren und dabei über den Bereich 56 an dem zweiten Handgriff 16 schwenkbar anlenken. Die Schneide 62 ist an dem ersten Scherenschenkel 34 angeordnet.

Ein Werkstück wird beim Schneiden auf eine Auflagefläche der Auflageeinrichtung 60 aufgelegt. Die Auflageeinrichtung 60 dient beim Schneiden als Widerlager. Die Schneide 62 wirkt auf das Werkstück, wenn der zweite Handgriff 16 auf den ersten Handgriff 14 zu verschwenkt wird. Dadurch wird der erste Scherenschenkel 34 auf den zweiten Scherenschenkel 42 zu verschwenkt und es kann ein Schnitt ausgeführt werden.

Das Schwenklager 44 definiert eine erste Schwenkachse 64. Um diese erste Schwenkachse 64 sind der erste Scherenschenkel 34 und der zweite Scherenschenkel 42 relativ zueinander schwenkbar bzw. drehbar. Das Drehlager 18 definiert eine zweite Schwenkachse 66. Um diese zweite Schwenkachse 66 sind der erste Handgriff 14 und der zweite Handgriff 16 relativ zueinander schwenkbar.

Das Schwenklager 36 definiert eine dritte Schwenkachse 68. Um diese dritte Schwenkachse 68 ist der erste Scherenschenkel 34 relativ zu dem ersten Handgriff 14 schwenkbar. Das Schwenklager 40 definiert eine vierte Schwenkachse 70. Um diese vierte Schwenkachse 70 ist der zweite Scherenschenkel 42 relativ zu dem zweiten Handgriff 16 schwenkbar.

Die erste Schwenkachse 64, die zweite Schwenkachse 66, die dritte Schwenkachse 68 und die vierte Schwenkachse 70 sind jeweils parallel zueinander ausgerichtet.

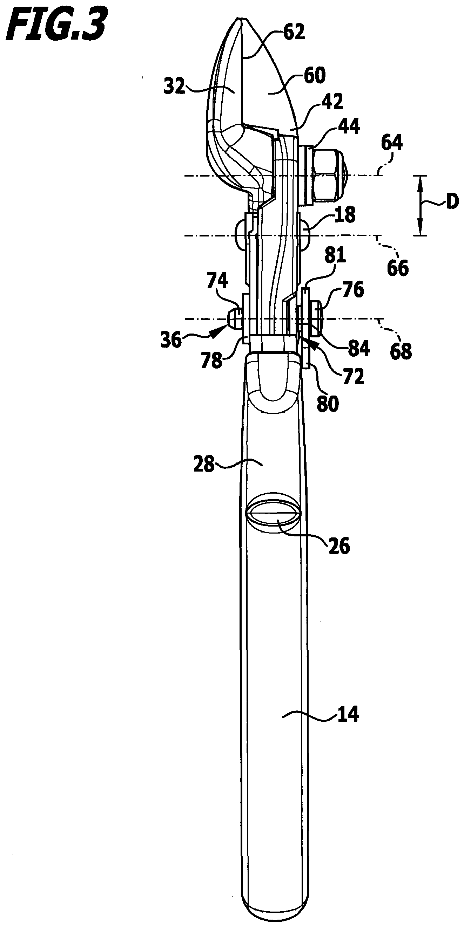

Bei der erfindungsgemäßen Schere 10 ist ein Abstand D (Figur 3) zwischen der ersten Schwenkachse 64 und der zweiten Schwenkachse 66 klein. Dieser Abstand D ist kleiner oder gleich 2 cm und insbesondere kleiner oder gleich 1,5 cm. Bei einer konkreten Ausführungsform liegt dieser Abstand bei ca. 1 cm.

Das Schwenklager 36 ist durch einen Bundbolzen 72 gebildet, welcher ein zylindrisches Stiftelement 74 und einen Bund(-kopf) 76 aufweist, wobei der Bund 76 einen größeren Durchmesser aufweist als das Stiftelement 74. Das Stiftelement 74 ist durch eine entsprechende Öffnung in dem ersten Scherenschenkel 34 und dem ersten Handgriff 14 durchgetaucht. Das Stiftelement 74 bildet eine Schwenkwelle mit der dritten Schwenkachse 68 als Schwenkachse. An einer dem Bund 76 abgewandten Seite sitzt dem ersten Schwerenschenkel 34 zugewandt eine Sicherungsscheibe 78. Die Sicherungsscheibe 78 sperrt eine axiale Beweglichkeit des Bundbolzens 72 in eine Richtung. Der Bund 76 sperrt (indirekt, wie unten noch näher erläutert wird) die axiale Beweglichkeit in die Gegenrichtung.

Die Schere 10 weist eine Fanglasche 80 auf. Diese ist bei dem gezeigten Ausführungsbeispiel als Riegel 81 ausgebildet, durch welchen eine geschlossene Stellung des Scherenkopfs 48 fixierbar ist. Es ist aber grundsätzlich auch möglich, dass die Fanglasche keine Verriegelungsfunktion hat.

Die Fanglasche 80 ist flach ausgebildet. Sie weist eine erste insbesondere kreisrunde Ausnehmung 82 auf. Durch diese Ausnehmung 82 ist das Stiftelement 74 des Bundbolzens 72 durchgetaucht. Zwischen dem ersten Handgriff 14 und der Fanglasche 80 ist ein Federring 84 angeordnet. Dieser sitzt dabei auf dem Stiftelement 74 in dem genannten Bereich. Der Federring 84 weist eine Elastizität in einer Richtung parallel zur dritten Schwenkachse 68 auf.

Der Bund 76 ist über einer Oberseite der Fanglasche 80 angeordnet. Der Bund 76 sorgt dadurch für eine Fixierung der Fanglasche 80 gegen axiales Lösen.

Die Fanglasche 80 ist an dem Schwenklager 36 angeordnet und ist selber schwenkbar mit einer Schwenkachse, welche mit der dritten Schwenkachse 68 zusammenfällt.

Die Fanglasche 80 ist dabei an der Halteeinrichtung 12 an einer Seite bezogen auf die zweite Schwenkachse 66 angeordnet, welche zu der derjenigen Seite abgewandt ist, welche die erste Schwenkachse 64 enthält. Dadurch liegt die zweite Schwenkachse 66 zwischen der ersten Schwenkachse 64 und der Fanglasche 80.

Die Fanglasche 80 weist eine weitere Ausnehmung 86 auf. Diese Ausnehmung ist nach oben und nach unten (bezogen auf die Richtung der dritten Schwenkachse 68) offen. Seitlich ist die Ausnehmung 86 geschlossen und durch eine geschlossene Wand begrenzt.

Die Ausnehmung 86 hat eine L-förmige Gestalt. Sie weist dabei einen ersten Bereich 88 auf. Dieser erste Bereich 88 hat gegenüberliegende Sperrflächen 90a, 90b. Mit dem ersten Bereich 88 verbunden ist ein zweiter Bereich 92. Der zweite Bereich 92 weist eine Sperrfläche 94 auf. Bezogen auf eine Mittelachse 96 der Fanglasche 80 ist der erste Bereich 88 querversetzt zu dem zweiten Bereich 92.

Das Schwenklager 40 ist grundsätzlich auf die gleiche Weise ausgebildet wie das Schwenklager 36 mit einem Bundbolzen 98. Dieser Bundbolzen 98 weist entsprechend wie der Bundbolzen 72 ein Stiftelement 74 und einen Bund 76 auf. Das Stiftelement 74 des Bundbolzens 98 ist durch eine Öffnung im zweiten Handgriff 16 und im zweiten Scherenschenkel 42 durchgetaucht. Das Stiftelement 74 des Bundbolzens 98 bildet eine Schwenkwelle. Die axiale Sicherung erfolgt über eine Sicherungsscheibe 78.

Der Bundbolzen 98 ist mit seinem Stiftelement 74 auch durch die Ausnehmung 86 der Fanglasche 80 getaucht. Das Stiftelement 74 des Bundbolzens 98 bildet ein Fixierungselement 99. Über das Fixierungselement 99 wirkt die Fanglasche 80 auf den zweiten Handgriff 16. Der Bund 76 des Bundbolzens 98 liegt dabei oberhalb der Fanglasche 80. Zwischen der Fanglasche 80 und dem zweiten Handgriff sitzt ein Federring 100. Dieser Federring 100 ist dabei auf dem Stiftelement 74 des Bundbolzens 98 positioniert.

Der erste Bereich der Ausnehmung 86 ist an das Stiftelement 74 des Bundbolzens 98 (Fixierungselement 99) angepasst. Ein Abstand zwischen den Sperrflächen 90a, 90b ist derart, dass, wenn das Fixierungselement 99 in dem ersten Bereich 88 positioniert ist, die Fanglasche 80 als Riegel 81 ein Auseinanderschwenken des ersten Handgriffs 14 und des zweiten Handgriffs 16 sperrt und damit eine geschlossene Stellung des Scherenkopfs 48 sichert. Entsprechend ist dieser Abstand zwischen den Sperrflächen 90a, 90b nur wenig größer als der Durchmesser des Stiftelements 74 des Bundbolzens 98.

Die Ausnehmung 86 ist am Übergang zwischen dem zweiten Bereich 92 und dem ersten Bereich 88 so ausgebildet, dass durch entsprechende Bewegung der Fanglasche 80 das Fixierungselement 99 in den zweiten Bereich 92 bringbar ist. Außerhalb des ersten Bereichs 88 weist die Ausnehmung 86 eine Erstreckung in einer Richtung parallel zur Mittelachse 96 auf, welche eine Beweglichkeit relativ zum Fixierungselement 99 zum Auseinanderschwenken des ersten Handgriffs 14 und des zweiten Handgriffs 16 und damit ein Öffnen des Scherenkopfs 48 (Auseinanderschwenken des ersten Scherenschenkels 34 und des zweiten Scherenschenkels 42) ermöglicht. Die maximale Öffnungsweite ist dadurch definiert, dass das Fixierungselement 99 an die Sperrfläche 94 des zweiten Bereichs 92 stößt. Die Fanglasche 80 mit ihrer Ausnehmung 86 bildet dadurch einen Öffnungsbegrenzer für den Scherenkopf 48 und legt die maximale Öffnungsweite fest.

Die Fanglasche 80 begrenzt die Auseinanderschwenkbarkeit des ersten Handgriffs 14 und des zweiten Handgriffs 16. Wenn das Fixierungselement 99 an die Sperrfläche 94 stößt, ist keine weitere Auseinanderbewegung möglich. Dadurch ist die Öffnungsweite zwischen dem ersten Scherenschenkel 34 und dem zweiten Scherenschenkel 42 begrenzt.

Die maximale, durch die Fanglasche 80 begrenzte Öffnungsweite ist dabei so eingestellt, dass bei jeder geöffneten Stellung des Scherenkopfs 48 eine Vorspannung zwischen der Schneide 62 und einer Gegenschneide an der Auflageeinrichtung 60 gewährleistet ist.

Das Fixierungselement 99 ist ständig in der Ausnehmung 86 positioniert. Bei Positionierung in dem ersten Bereich 88 ist die geschlossene Stellung des Scherenkopfs 48 fixiert. Wenn das Fixierungselement 99 an der Sperrfläche 94 anliegt, ist die Öffnungsweite begrenzt. In Zwischenbereichen ist ein Auseinanderschwenken des ersten Handgriffs 14 und des zweiten Handgriffs 16 und ein entsprechendes Zuschwenken ermöglicht, um eine Schneidbewegung durchzuführen.

Bei der Schere 10 liegen die erste Schwenkachse 64 und die zweite Schwenkachse 66 nahe beieinander. Dadurch lässt sich eine hohe Schneidleistung realisieren. Jedoch ist dadurch der Platz für einen Endanschlag stark minimiert. Bei der erfindungsgemäßen Lösung wird dieser Endanschlag an anderer Stelle durch die Fanglasche 80 realisiert. Durch die Begrenzung der maximalen Öffnungsweite, welche entsprechend eingestellt ist, lässt sich auch bei vollständig geöffnetem Scherenkopf 48 eine genügende Abdeckung der Schneide 62 erreichen, damit kein Einschneiden erfolgt.

Durch die Fanglasche 80 mit der Ausnehmung 86 lässt sich die Öffnungsweite mit hoher Genauigkeit begrenzen; der maximale Öffnungswinkel zwischen dem ersten Scherenschenkel 34 und dem zweiten Scherenschenkel 42 lässt sich über Dimensionierung der Ausnehmung 86 auf einfache Weise exakt definieren.

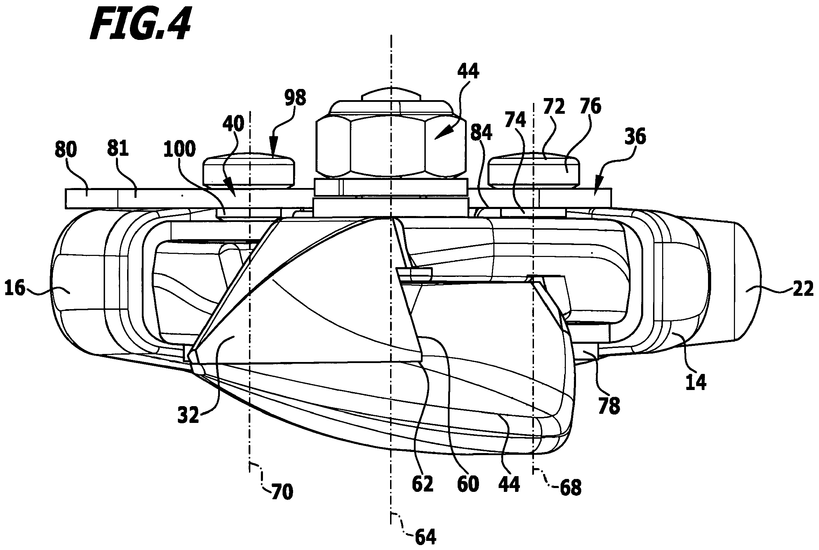

Die Schere 10 funktioniert wie folgt:
Im geschlossenen Zustand des Scherenkopfs 48, in welchem die Schneide 62 zurückgesetzt ist und gewissermaßen gesichert ist (Figur 4), ist das Stiftelement 74 des Bundbolzens 98 in den ersten Bereich 88 der Ausnehmung 86 zwischen den Sperrflächen 90a, 90b eingetaucht.

Zur Betätigung der Schere 10 wird die Fanglasche 80 als Riegel 81 eventuell nach Druckausübung auf den ersten Handgriff 14 und den zweiten Handgriff 16 zur Aufeinanderzubewegung so verschwenkt, dass das Fixierungselement 99 aus dem ersten Bereich 88 austauchen kann. Durch Wirkung der Federkraft der Federeinrichtung 30 bewegen sich der erste Handgriff 14 und der zweite Handgriff 16 auseinander und der Scherenkopf 48 wird geöffnet. Die Öffnungsweite ist dadurch begrenzt, dass das Fixierungselement 99 an die Sperrfläche 94 des zweiten Bereichs 92 stößt. Dadurch ist dann die maximale Öffnungsweite des Scherenkopfs 48 definiert. Die maximale Öffnungsweite ist dabei durch Ausbildung der Fanglasche 80 angepasst an die Ausbildung des Scherenkopfs 48 mit seiner Schneide 62 eingestellt.

Ein zu schneidendes Werkstück wird zwischen den ersten Scherenschenkel 34 und den zweiten Scherenschenkel 42 auf die Auflageeinrichtung 60 aufgelegt.

Es werden dann der erste Handgriff 14 und der zweite Handgriff 16 relativ aufeinander zu verschwenkt unter Kraftaufwand zur Überwindung der Federkraft der Federeinrichtung 30. Dadurch erfolgt eine Schnitteinbringung in das Werkstück.

### Bezugszeichenliste

- 10: Schere
- 12: Halteeinrichtung
- 14: Erster Handgriff
- 16: Zweiter Handgriff
- 18: Drehlager
- 20: Halteelement
- 22: Erhöhung
- 24: Halteelement
- 26: Erhöhung
- 28: Kuhle
- 30: Federeinrichtung
- 32: Spiralfeder
- 34: Erster Scherenschenkel
- 36: Schwenklager
- 38: Hinteres Ende
- 40: Schwenklager
- 42: Zweiter Scherenschenkel
- 44: Schwenklager
- 46: Vorderes Ende
- 48: Scherenkopf
- 50: Bereich
- 52: Vorderes Ende
- 54: Mittlerer Bereich
- 56: Bereich
- 58: Mittlerer Bereich
- 60: Auflageeinrichtung
- 62: Schneide
- 64: Erste Schwenkachse
- 66: Zweite Schwenkachse
- 68: Dritte Schwenkachse
- 70: Vierte Schwenkachse
- 72: Bundbolzen
- 74: Stiftelement
- 76: Bund
- 78: Sicherungsscheibe
- 80: Fanglasche
- 81: Riegel
- 82: Ausnehmung
- 84: Federring
- 86: Ausnehmung
- 88: Erster Bereich
- 90a, b: Sperrfläche
- 92: Zweiter Bereich
- 94: Sperrfläche
- 96: Mittelachse
- 98: Bundbolzen
- 99: Fixierungselement
- 100: Federring

## Patentansprüche

1. Schere, umfassend einen Scherenkopf (48) mit einem ersten Scherenschenkel (34) und einem zweiten Scherenschenkel (42), welche um eine erste Schwenkachse (64) schwenkbar aneinander angelenkt sind, und eine Halteeinrichtung (12) mit einem ersten Handgriff (14) und einem zweiten Handgriff (16), welche um eine zweite Schwenkachse (66) schwenkbar aneinander angelenkt sind, wobei der erste Scherenschenkel (34) an dem ersten Handgriff (14) um eine dritte Schwenkachse (68) schwenkbar angelenkt ist und der zweite Scherenschenkel (42) an dem zweiten Handgriff (16) um eine vierte Schwenkachse (70) schwenkbar angelenkt ist, und eine Fanglasche (80), welche an dem einen Handgriff (14) angeordnet ist und auf den anderen Handgriff (16) wirkt, wobei die Fanglasche als Öffnungsbegrenzer für den Scherenkopf (48) ausgebildet ist, welche eine maximale Öffnungsweite einstellt, **dadurch gekennzeichnet, dass** die Fanglasche (80) an der Halteeinrichtung (12) an einer Seite bezogen auf die zweite Schwenkachse (66) angeordnet ist, welche der Seite abgewandt ist, an welcher die erste Schwenkachse (64) liegt.

2. Schere nach Anspruch 1, **dadurch gekennzeichnet, dass** die Fanglasche (80) an dem ersten Handgriff (14) schwenkbar angelenkt ist, und insbesondere, dass die Fanglasche (80) im Bereich eines Schwenklagers (36) des ersten Handgriffs (14) für den ersten Scherenschenkel (34) angeordnet ist, und insbesondere, dass eine Schwenkachse der Fanglasche (80) mindestens näherungsweise mit der dritten Schwenkachse (68) zusammenfällt.

3. Schere nach einem der vorangehenden Ansprüche, **dadurch gekennzeichnet, dass** die Fanglasche (80) über einen Bundbolzen (72) an dem ersten Handgriff (14) angelenkt ist.

4. Schere nach einem der vorangehenden Ansprüche, **dadurch gekennzeichnet, dass** zwischen der Fanglasche (80) und dem ersten Handgriff (14) ein Federring (84) angeordnet ist, und insbesondere, dass der Bundbolzen (72) eine Schwenkwelle für die Schwenkbarkeit des ersten Scherenschenkels (34) an dem ersten Handgriff (14) bildet.

5. Schere nach einem der vorangehenden Ansprüche, **dadurch gekennzeichnet, dass** die Fanglasche (80) als Riegel (81) ausgebildet ist, durch welchen eine geschlossene Stellung des Scherenkopfs (48) fixierbar ist.

6. Schere nach einem der vorangehenden Ansprüche, **dadurch gekennzeichnet, dass** die Fanglasche (80) eine Ausnehmung (86) aufweist, in welche ein Fixierungselement (99) eingetaucht ist, welches an dem zweiten Handgriff (16) sitzt, und insbesondere, dass das Fixierungselement (99) eine Schwenkwelle für die Schwenkbarkeit des zweiten Scherenschenkels (42) an dem zweiten Handgriff (16) bildet, und insbesondere, dass das Fixierungselement (99) ein Bundbolzen (98) ist, und insbesondere, dass zwischen der Fanglasche (80) und dem zweiten Handgriff (16) am Fixierungselement (99) ein Federring angeordnet ist.

7. Schere nach Anspruch 6, **dadurch gekennzeichnet, dass** die Ausnehmung (86) einen ersten Bereich (88) aufweist, wobei bei in dem ersten Bereich (88) positioniertem Fixierungselement (99) der Scherenkopf (48) in seiner geschlossenen Stellung fixiert ist.

8. Schere nach Anspruch 7, **dadurch gekennzeichnet, dass** der erste Bereich (88) durch gegenüberliegende Sperrflächen (90a, 90b) für das Fixierungselement (99) begrenzt ist.

9. Schere nach einem der Ansprüche 6 bis 8, **dadurch gekennzeichnet, dass** die Ausnehmung (86) einen zweiten Bereich (92) aufweist, wobei bei in dem zweiten Bereich (92) positioniertem Fixierungselement (99) die Öffnungsweite des Scherenkopfs (48) begrenzbar ist.

10. Schere nach Anspruch 9, **dadurch gekennzeichnet, dass** der zweite Bereich (92) durch eine Sperrfläche (94) für das Fixierungselement (99) begrenzt ist, welche dem anderen Handgriff (14) abgewandt ist.

11. Schere nach Anspruch 9 oder 10, **dadurch gekennzeichnet, dass** der erste Bereich (88) zu dem zweiten Bereich (92) bezogen auf eine Mittelachse (96) der Fanglasche (80) querversetzt ist.

12. Schere nach einem der Ansprüche 6 bis 11, **dadurch gekennzeichnet, dass** die Ausnehmung (86) eine L-förmige Gestalt hat.

13. Schere nach einem der vorangehenden Ansprüche, **dadurch gekennzeichnet, dass** die erste Schwenkachse (64), zweite Schwenkachse (66), dritte Schwenkachse (68) und vierte Schwenkachse (70) jeweils parallel zueinander orientiert sind.

14. Schere nach einem der vorangehenden Ansprüche, **dadurch gekennzeichnet, dass** ein Abstand zwischen der ersten Schwenkachse (64) und der zweiten Schwenkachse (66) kleiner oder gleich 2 cm ist.

15. Schere nach einem der vorangehenden Ansprüche, **gekennzeichnet durch** eine Federeinrichtung (30), welche so angeordnet und ausgebildet ist, dass das Zuschwenken des zweiten Handgriffs (16) auf den ersten Handgriff (14) einen Kraftaufwand gegen die Federkraft der Federeinrichtung (30) erfordert, und insbesondere, dass die Federeinrichtung (30) an der Halteeinrichtung (12) angeordnet ist.

## Claims

1. Shears, comprising a shears head (48) having a first shears leg (34) and a second shears leg (42) which are articulated to one another for pivotal movement about a first pivot axis (64), and a holding device (12) having a first handle (14) and a second handle (16), which are articulated to one another for pivotal movement about a second pivot axis (66), wherein the first shears leg (34) is articulated to the first handle (14) for pivotal movement about a third pivot axis (68) and the second shears leg (42) is articulated to the second handle (16) for pivotal movement about a fourth pivot axis (70), and a catch strap (80) which is arranged on the one handle (14) and acts upon the other handle (16), wherein the catch strap is configured as an opening limiter for the shears head (48) which adjusts a maximum opening width, **characterized in that** the catch strap (80) is arranged on the holding device (12) on a side which, relative to the second pivot axis (66), faces away from the side on which is located the first pivot axis (64).

2. Shears in accordance with claim 1, **characterized in that** the catch strap (80) is articulated to the first handle (14) for pivotal movement relative thereto, and in particular **in that** the catch strap (80) is arranged in the area of a pivot bearing (36) of the first handle (14) for the first shears leg (34), and in particular **in that** a pivot axis of the catch strap (80) coincides at least approximately with the third pivot axis (68).

3. Shears in accordance with any one of the preceding claims, **characterized in that** the catch strap (80) is articulated to the first handle (14) via a collar bolt (72).

4. Shears in accordance with any one of the preceding claims, **characterized in that** a spring washer (84) is arranged between the catch strap (80) and the first handle (14), and in particular **in that** the collar bolt (72) forms a pivot shaft for the pivotability of the first shears leg (34) on the first handle (14).

5. Shears in accordance with any one of the preceding claims, **characterized in that** the catch strap (80) is configured as a latch (81) by which a closed position of the shears head (48) is fixable.

6. Shears in accordance with any one of the preceding claims, **characterized in that** the catch strap (80) has a recess (86) which has entered thereinto a fixing element (99) that is located on the second handle (16), and in particular **in that** the fixing element (99) forms a pivot shaft for the pivotability of the second shears leg (42) on the second handle (16), and in particular **in that** the fixing element (99) is a collar bolt (98), and in particular **in that** a spring washer is arranged between the catch strap (80) and the second handle (16) on the fixing element (99).

7. Shears in accordance with claim 6, **characterized in that** the recess (86) has a first region (88), wherein the shears head (48) is fixed in its closed position when the fixing element (99) is positioned in the first region (88).

8. Shears in accordance with claim 7, **characterized in that** the first region (88) is delimited by opposite blocking surfaces (90a, 90b) for the fixing element (99).

9. Shears in accordance with any one of claims 6 to 8, **characterized in that** the recess (86) has a second region (92), wherein the opening width of the shears head (48) is limitable when the fixing element (99) is positioned in the second region (92).

10. Shears in accordance with claim 9, **characterized in that** the second region (92) is delimited by a blocking surface (94) for the fixing element (99) that faces away from the other handle (14).

11. Shears in accordance with claim 9 or 10, **characterized in that** the first region (88) is offset from the second region (92) in a transverse direction relative to a central axis (96) of the catch strap (80).

12. Shears in accordance with any one of claims 6 to 11, **characterized in that** the recess (86) has an L-shaped form.

13. Shears in accordance with any one of the preceding claims, **characterized in that** the first pivot axis (64), the second pivot axis (66), the third pivot axis (68) and the fourth pivot axis (70) are each oriented parallel to one another.

14. Shears in accordance with any one of the preceding claims, **characterized in that** a distance between the first pivot axis (64) and the second pivot axis (66) is less than or equal to 2 cm.

15. Shears in accordance with any one of the preceding claims, **characterized by** a spring device (30) which is arranged and configured such that the pivotal movement of the second handle (16) towards the first handle (14) requires exertion of force against the spring force of the spring device (30), and in particular that the spring device (30) is arranged on the holding device (12).

## Revendications

1. Sécateur, comprenant une tête de sécateur (48) avec une première branche de sécateur (34) et une deuxième branche de sécateur (42), lesquelles sont articulées l'une sur l'autre de manière à pouvoir pivoter autour d'un premier axe de pivotement (64), et un dispositif de prise (12) avec une première poignée (14) et une deuxième poignée (16), lesquelles sont articulées l'une sur l'autre de manière à pouvoir pivoter autour d'un deuxième axe de pivotement (66), dans lequel la première branche de sécateur (34) est articulée sur la première poignée (14) de manière à pouvoir pivoter autour d'un troisième axe de pivotement (68) et la deuxième branche de sécateur (42) est articulée sur la deuxième poignée (16) de manière à pouvoir pivoter autour d'un quatrième axe de pivotement (70), et une patte de retenue (80), laquelle est disposée sur l'une des poignées (14) et agit sur l'autre poignée (16), dans lequel la patte de retenue est réalisée sous la forme d'un limiteur d'ouverture pour la tête de sécateur (48), laquelle règle une largeur d'ouverture maximale, **caractérisé en ce que** la patte de retenue (80) est disposée sur le dispositif de prise (12) sur une face par rapport au deuxième axe de pivotement (66), laquelle est opposée à la face sur laquelle le premier axe de pivotement (64) se situe.

2. Sécateur selon la revendication 1, **caractérisé en ce que** la patte de retenue (80) est articulée sur la première poignée (14) de manière pivotante, et en particulier que la patte de retenue (80) est disposée dans la zone d'un palier pivotant (36) de la première poignée (14) pour la première branche de sécateur (34), et en particulier qu'un axe de pivotement de la patte de retenue (80) coïncide au moins approximativement avec le troisième axe de pivotement (68).

3. Sécateur selon l'une quelconque des revendications précédentes, **caractérisé en ce que** la patte de retenue (80) est articulée sur la première poignée (14) par l'intermédiaire d'un boulon à collerette (72) .

4. Sécateur selon l'une quelconque des revendications précédentes, **caractérisé en ce qu'**une rondelle élastique (84) est disposée entre la patte de retenue (80) et la première poignée (14), et en particulier que le boulon à collerette (72) forme un arbre de pivotement pour la possibilité de pivotement de la première branche de sécateur (34) sur la première poignée (14) .

5. Sécateur selon l'une quelconque des revendications précédentes, **caractérisé en ce que** la patte de retenue (80) est réalisée sous la forme d'un verrou (81), par lequel une position fermée de la tête de sécateur (48) peut être fixée.

6. Sécateur selon l'une quelconque des revendications précédentes, **caractérisé en ce que** la patte de retenue (80) présente un évidement (86), dans lequel un élément de fixation (99) est enfoncé, lequel repose sur la deuxième poignée (16), et en particulier que l'élément de fixation (99) forme un arbre de pivotement pour la possibilité de pivotement de la deuxième branche de sécateur (42) sur la deuxième poignée (16), et en particulier que l'élément de fixation (99) est un boulon à collerette (98), et en particulier qu'une rondelle élastique est disposée entre la patte de retenue (80) et la deuxième poignée (16) sur l'élément de fixation (99) .

7. Sécateur selon la revendication 6, **caractérisé en ce que** l'évidement (86) présente une première zone (88), dans lequel lorsque l'élément de fixation (99) est positionné dans la première zone (88), la tête de sécateur (48) est fixée dans sa position fermée.

8. Sécateur selon la revendication 7, **caractérisé en ce que** la première zone (88) est délimitée par des surfaces de blocage (90a, 90b) opposées pour l'élément de fixation (99).

9. Sécateur selon l'une quelconque des revendications 6 à 8, **caractérisé en ce que** l'évidement (86) présente une deuxième zone (92), dans lequel lorsque l'élément de fixation (99) est positionné dans la deuxième zone (92), la largeur d'ouverture de la tête de sécateur (48) peut être limitée.

10. Sécateur selon la revendication 9, **caractérisé en ce que** la deuxième zone (92) est délimitée par une surface de blocage (94) pour l'élément de fixation (99), laquelle est opposée à l'autre poignée (14).

11. Sécateur selon la revendication 9 ou 10, **caractérisé en ce que** la première zone (88) est décalée transversalement de la deuxième zone (92) par rapport à un axe médian (96) de la patte de retenue (80).

12. Sécateur selon l'une quelconque des revendications 6 à 11, **caractérisé en ce que** l'évidement (86) possède une configuration en forme de L.

13. Sécateur selon l'une quelconque des revendications précédentes, **caractérisé en ce que** le premier axe de pivotement (64), deuxième axe de pivotement (66), troisième axe de pivotement (68) et quatrième axe de pivotement (70) sont orientés respectivement parallèlement les uns aux autres.

14. Sécateur selon l'une quelconque des revendications précédentes, **caractérisé en ce qu'**une distance entre le premier axe de pivotement (64) et le deuxième axe de pivotement (66) est inférieure ou égal à 2 cm.

15. Sécateur selon l'une quelconque des revendications précédentes, **caractérisé par** un dispositif à ressort (30), lequel est disposé et réalisé de sorte que le pivotement de fermeture de la deuxième poignée (16) sur la première poignée (14) exige un effort à l'encontre de la force de ressort du dispositif à ressort (30), et en particulier que le dispositif à ressort (30) est disposé sur le deuxième poignée (12).
